# EUROPÄISCHE PATENTSCHRIFT

(11) **EP 0 691 077 B1**
(45) Veröffentlichungstag und Bekanntmachung des Hinweises auf die Patenterteilung: **23.09.1998**
(21) Anmeldenummer: 95110573.3
(22) Anmeldetag: 06.07.1995
(51) Int. Cl.: A01K 73/02, A01K 80/00, A01K 75/00

(54) **Verfahren und Vorrichtung zum Fischen von Plattfischen oder dergleichen**
Method and means for catching flat-fish or similar
Procédé et installation pour pêcher des pleuronectilés

(30) Priorität: 09.07.1994 DE 4424238
(43) Veröffentlichungstag der Anmeldung: 10.01.1996
(73) Patentinhaber: HAIKO MEYER GmbH & Co. KG, 26316 Varel (DE)
(72) Erfinder: Meyer, Haiko, D-26316 Varel (DE)
(74) Vertreter: Goddar, Heinz J., Dr.

(56) Entgegenhaltungen:
- WO-A-91/03158
- NL-A- 6 716 418
- NL-A- 8 403 029
- US-A- 3 521 386
- US-A- 3 862 502

## Beschreibung

Die Erfindung betrifft eine Vorrichtung zum Fischen von sich am Boden eines Gewässers, insbesondere am Meeresboden, aufhaltenden Lebewesen, mit einem über den Gewässerboden schleppbaren Baumkurr- oder Grundschleppnetz oder dergleichen mit in Fangrichtung eines Fischereifahrzeuges weisender Fangöffnung, dessen die Fangöffnung unten begrenzende untere Vorderkante auf dem Gewässerboden aufliegt und dessen die Fangöffnung oben begrenzende obere Vorderkante an einem Kurrbaum oder dergleichen befestigt ist, und einer Injektionseinrichtung zur Erzeugung von den Gewässerboden aufwirbelnden Injektionsfluidstrahlen.

Eine derartige Vorrichtung ist aus der NL-OS 84 03 029 bekannt und wird mit Preßluft betrieben, d.h., die erzeugten Injektionsstrahlen bestehen aus Preßluft. Dies geschieht mittels an den Enden von starren Injektionsrohren angeordneter Düsenspitzen, die in den Gewässerboden eintauchen.

Aus der WO-A-91/03158 ist eine Vorrichtung zum Fischen von Muscheln bekannt, die ein im wesentlichen quer zur Längsachse des Fischereifahrzeuges unterhalb desselben angeordnetes Düsenrohr aufweist, bei dem die Düsen unmittelbar am Düsenrohr angeordnet sind.

Sowohl die aus der NL-OS 84 03 029 als auch die aus der WO-A-91/03158 bekannte Vorrichtung weist den Nachteil auf, daß es nur mit Schwierigkeiten möglich ist, Injektionsfluidstrahlen einer derartigen Präzision zu erzeugen, daß auch beim Fischen von Plattfischen und dergleichen die schonende Fluidströmung am Gewässerboden in einer Weise erzeugt werden kann, die einerseits das zuverlässige Aufscheuchen der Plattfische gewährleistet, andererseits aber andere Lebewesen, die im Gewässerboden leben, nicht beeinträchtigt werden.

Der Erfindung liegt daher die Aufgabe zugrunde, die eingangs beschriebene Vorrichtung dahingehend weiterzubilden, daß die oben beschriebenen Probleme gelöst werden.

Erfindungsgemäß wird diese Aufgabe dadurch gelöst, daß die Injektionseinrichtung eine Reihe mit gegenseitigen Abstand im wesentlichen senkrecht zur Längserstreckung des Kurrbaumes verlaufender, auf den Gewässerboden herabhängender Düsenschläuche zur Erzeugung der Injektionsfluidstrahlen umfaßt.

Dabei kann vorgesehen sein, daß die Injektionseinrichtung ein im wesentlichen quer zur Längsachse des Fischereifahrzeuges unterhalb desselben angeordnetes, in seiner Länge im wesentlichen der Breite der Fangöffnung des Netzes entsprechendes Düsenrohr mit einer Vielzahl mit gegenseitigem Abstand angeordneter, dem Gewässerboden zugewandter Düsen aufweist, welches mit dem Injektionsfluid beaufschlagbar ist, wobei das Netz im Bereich seiner Fangöffnung relativ zu dem Düsenrohr in der Weise befestigt ist, daß eine von den aus den Düsen ausgehenden Injektionsfluidstrahlen unter Aufwirbelung des Gewässerbodens erzeugte, aus Fahrtrichtung gesehen nach schräg hinten gerichtete Aufwärtsströmung im wesentlichen in die Fangöffnung des Netzes gerichtet ist, und wobei die Düsen an den von dem Düsenrohr herabhängenden Düsenschläuchen vorgesehen sind.

Eine weitere Ausführungsform der Erfindung sieht vor, daß die Düsenschläuche auf dem Gewässerboden leicht aufliegen.

Es kann auch vorgesehen sein, daß das Düsenrohr am Kurrbaum eines herkömmlichen Baumkurrnetzes im wesentlichen parallel zu diesem angebracht ist.

Die Erfindung schlägt auch vor, daß das Düsenrohr der im wesentlichen hohl ausgebildete Kurrbaum eines herkömmlichen Baumkurrnetzes ist.

Es kann auch vorgesehen sein, daß die Düsenschläuche bezüglich des Kurrbaumes winkel- und/oder höhenmäßig verstellbar sind.

Nach der Erfindung wird vorgeschlagen, daß das Volumen und/oder der Druck der Injektionsfluidstrahlen einstellbar ist/sind.

Schließlich ist die Erfindung gekennzeichnet durch eine Einrichtung zum Erzeugen eines die Fangöffnung des Netzes umgebenden Luftsperrvorhanges.

Der Erfindung liegt die überraschende Erkenntnis zugrunde, daß es durch die Verwendung von Düsenschläuchen gelingt, die Injektionsfluidstrahlen aus den Düsen unmittelbar oberhalb des Gewässerbodens, und zwar vorzugsweise in geregeltem Abstand, oder auch in der oberen Schicht des Gewässerbodens selbst zu erzeugen, und zwar vorzugsweise mit einstellbarem Druck, wodurch einerseits vermieden wird, daß eine unnötige Beeinträchtigung des Gewässerbodens erfolgt, andererseits aber gewährleistet ist, daß die Plattfische zuverlässig aufgescheucht werden. Dadurch, daß Düsenschläuche anstelle von starren Injektionsrohren vorgesehen sind, läßt sich auch Hindernissen ausweichen.

Besonders empfiehlt es sich, abgewandelte herkömmliche Baumkurrnetze zu verwenden, wobei die Injektionseinrichtung dann durch entsprechende Ausbildung des Kurrbaumes (Hohlrohr) oder entsprechende Anbringung am Kurrbaum realisiert werden kann.

In jedem Fall werden keine Schleppketten mehr verwendet, vielmehr liegen beispielsweise bei der Verwendung ansonsten herkömmlicher Baumkurrnetze nur noch die beiden Schlitten und eine Rollkette auf dem Gewässerboden auf, um das Netz in der Nähe des Bodens zu halten. Durch entsprechende Dosierung und Richtungsgebung der Injektionfluidstrahlen kann dafür gesorgt werden, daß vom Meeresboden aufgescheuchte Plattfische oder dergleichen gezielt in die Fangöffnung des Netzes "gespült" werden. Durch entsprechende Variation des Durchsatzes und/oder des Druckes der Injektionsfluidstrahlen, bei denen es sich insbesondere um durch Ansaugung von Umgebungswasser erzeugte Wasserstrahlen handeln kann, ist es möglich, den Meeresboden je nach Art der Meerestiere, die gefangen werden sollen, unterschiedlich tief aufzuwirbeln - je nachdem also, ob beispielsweise Krabben, Seezungen oder aber anderes gefangen werden sollen -, wodurch eine besondere Schonung der Meeresbodenfauna gewährleistet ist.

Angemerkt sei im übrigen noch, daß die Injektionsfluidstrahlen natürlich auch insoweit einen Feststoffzusatz aufweisen können, als z. B. Sand mit angesaugt und auf die Injektionsdüsen aufgegeben werden kann. Hierdurch läßt sich ggf. die Aufwirbelungseffektivität der Injektionsfluidstrahlen noch verbessern, insbesondere bei besonders dichter Beschaffenheit des Gewässerbodens.

Weitere Merkmale und Vorteile der Erfindung ergeben sich aus der nachstehenden Beschreibung, in der Ausführungsbeispiele anhand der schematischen Zeichnung im einzelnen erläutert ist.

Dabei zeigt
- Fig. 1: ein Ausführungsbeispiel einer Vorrichtung nach der Erfindung in schematischer Aufsicht;
- Fig. 2: einen Schnitt entlang der Linie VII-VII von Fig. 1; und
- Fig. 3: ein Ausführungsbeispiel einer Vorrichtung nach demselben Stand der Technik in schematischer Seitenansicht, teilweise geschnitten.

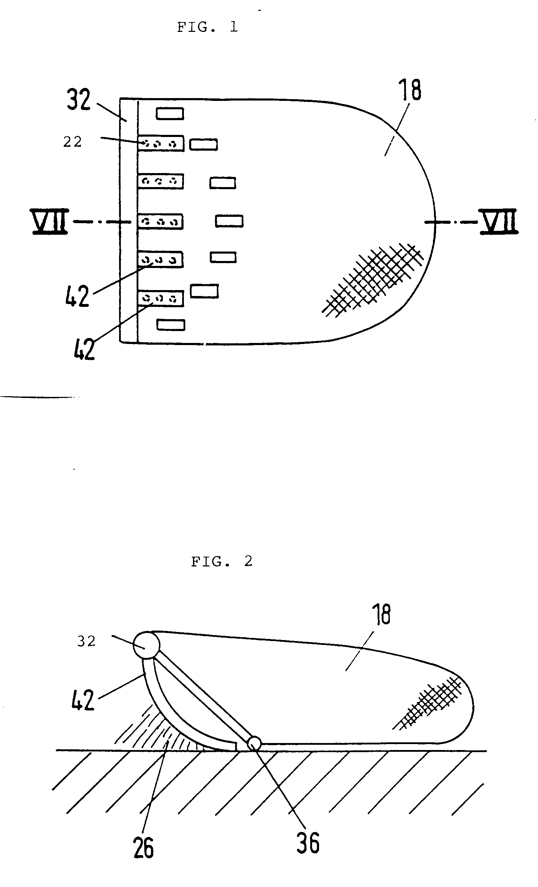

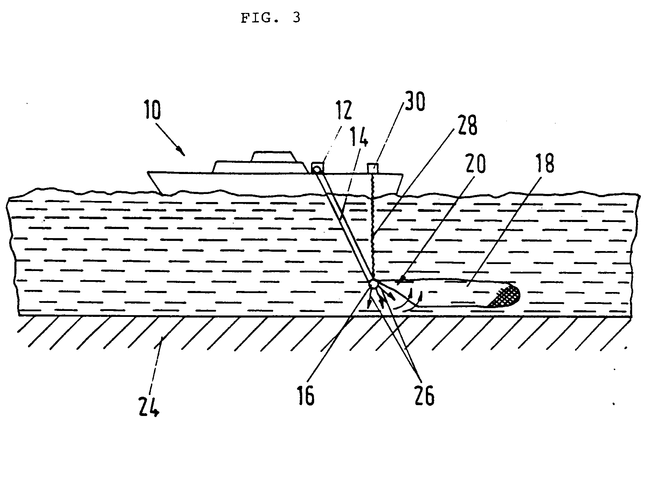

Wie Fig. 3 erkennen läßt, ist die Vorrichtung nach dem Stand der Technik bei dem dort gezeigten Ausführungsbeispiel an einem Schiffskörper 10 angebracht. Dabei tragen zwei auf Lagerböcken 12 schwenkbar beidseitig des Schiffes angebrachte Tragrohre 14 an ihren in Fig. 3 unten liegenden Enden ein Quer-Düsenrohr 16, an dem ein Grundschleppnetz 18 angebracht ist, welches eine in Fahrtrichtung des Schiffskörpers - in Fig. 1 sowie auch in den weiteren Figuren nach links weisend - gerichtete Fangöffnung 20 aufweist. Mit gegenseitigem Abstand sind über die Quererstreckung des Düsenrohres 16 eine Anzahl von Düsen 22 angeordnet. Die Düsen 22 erzeugen gegen einen Meeresboden 24 gerichtete Injektionsfluidstrahlen 26, wobei das Injektionsfluid bei dem gezeigten Ausführungsbeispiel aus unter Druck stehenden Wasser besteht, welches vom Schiffskörper 10 aus über geeignete Pumpeinrichtungen den Tragrohren 14 zugeführt und von diesen aus in das Düsenrohr 16 eingeleitet wird. Das Düsenrohr 16 ist mittels einer Seilaufhängung 28 höhenverstellbar, welche über eine Regeleinrichtung 30 derart betätigbar ist, daß das Düsenrohr 16 in einem vorgebbaren Abstand, beispielsweise 30 cm, über dem Meeresboden 24 gehalten werden kann. Das Düsenrohr 16 ist um seine Längsachse drehbar, wodurch der Anstellwinkel der Düsen 22 zum Meeresboden 24 so variiert werden kann, daß die vom Meeresboden 24 reflektierten Wasserstrahlen in die Fangöffnung 20 des Fangnetzes 18 hinein gerichtet werden.

Insgesamt arbeitet die das Düsenrohr 16 mit den Düsen 22 aufweisende Injektionseinrichtung in etwa in der Weise, wie sie in der EP-PS 0 278 335 für das dort erläuterte Verfahren zum Entfernen von Schlammablagerungen aus Hafenbecken oder dergleichen erläutert ist.

Die Vorrichtung nach dem Stand der Technik arbeitet bei dem Ausführungsbeispiel gemäß Fig. 3 beispielsweise wie folgt:

Der Schiffskörper 10 des Fischereifahrzeuges fährt in langsamer Fangfahrt in der Zeichnung gesehen nach links. Das Düsenrohr 16 wird in einem Abstand von 30 cm über dem Meeresboden 24 gehalten. Das Fangnetz 18 liegt mit der unteren Vorderkante seiner Fangöffnung 20 lose auf dem Meeresboden 24 auf. Der Meeresboden 24 wird mit den Injektionsfluidstrahlen 26, beim gezeigten Ausführungsbeispiel ausschließlich aus Wasser bestehend, so aufgewirbelt, wobei der Druck der Injektionsfluidstrahlen in gewünschter Weise einstellbar ist, daß Plattfische aufgescheucht werden und nach schräg hinten in das Grundschleppnetz 18 gelangen. Nach Beendigung des Fangvorganges wird das Grundschleppnetz 18 in bekannter Weise unter Anheben der Tragrohre 14, die hierbei zusätzlich als Hebeeinrichtung für das Grundschleppnetz 18 dienen, zum Schiffskörper 10 bewegt und dann geleert.

Bei dem Ausführungsbeispiel einer erfindungsgemäßen Vorrichtung gemaß Fig. 6 hängen von dem Kurrbaum 32, der mit entsprechenden Zuführeinrichtungen für Druckwasser versehen ist, eine Reihe von Düsenschläuchen 42 herab, welche die Injektionsstrahlen 26 erzeugen. Gemeinsam ist den mit Düsenschläuchen arbeitenden Ausführungsbeispielen, daß diese lediglich verhältnismäßig leicht auf dem Meeresboden 24 aufliegen, ohne daß hier eine nachhaltige Bodenzerstörung bewirkt würde. Dies ist deshalb möglich, weil die Düsenschlauche nicht als Grundschleppketten wirken sollen, welche die Aufwirbelung des Meeresbodens vor der Fangöffnung 20 des Fangnetzes 18 bewirken, sondern lediglich gleichsam als Träger für die die Injektionseinrichtung bildenden Düsen 22 liegen, aus denen die Injektionsfluidstrahlen 26 austreten, welche den Meeresboden schonend aufwirbeln.

### Bezugszeichenliste

- 10: Schiffskörper
- 12: Lagerbock
- 14: Tragrohr
- 16: Düsenrohr
- 18: Grundschleppnetz
- 20: Fangöffnung
- 22: Düse
- 24: Meeresboden
- 26: Injektionsfluidstrahl
- 28: Seilaufhängung
- 30: Regeleinrichtung
- 32: Kurrbaum
- 34: Rollenkette
- 36: Gummirolle
- 38: Düsenschlauch
- 40: Injektionsrohr
- 42: Düsenschlauch

## Patentansprüche

1. Vorrichtung zum Fischen von sich am Boden eines Gewässers, insbesondere am Meeresboden, aufhaltenden Lebewesen, mit einem über den Gewässerboden schleppbaren Baumkurr- oder Grundschleppnetz (18) oder dergleichen mit in Fangrichtung eines Fischereifahrzeuges (10) weisender Fangöffnung (20), dessen die Fangöffnung (20) unten begrenzende untere Vorderkante auf dem Gewässerboden (24) aufliegt und dessen die Fangöffnung (20) oben begrenzende obere Vorderkante an einem Kurrbaum (32) oder dergleichen befestig ist, und einer Injektionseinrichtung (16, 22) zur Erzeugung von den Gewässerboden (24) aufwirbelnden Injektionsfluidstrahlen (26), dadurch gekennzeichnet, daß die Injektionseinrichtung eine Reihe mit gegenseitigem Abstand im wesentlichen senkrecht zur Längserstreckung des Kurrbaumes (32) verlaufender, auf den Gewässerboden (24) herabhängender Düsenschläuche (42) zur Erzeugung der Injektionsfluidstrahlen (26) umfaßt.

2. Vorrichtung nach Anspruch 1, dadurch gekennzeichnet, daß die Injektionseinrichtung (16, 22) ein im wesentlichen quer zur Längsachse des Fischereifahrzeuges (10) unterhalb desselben angeordnetes, in seiner Länge im wesentlichen der Breite der Fangöffnung (20) des Netzes (18) entsprechendes Düsenrohr (16) mit einer Vielzahl mit gegenseitigem Abstand angeordneter, dem Gewässerboden (24) zugewandter Düsen (22) aufweist, welches mit dem Injektionsfluid beaufschlagbar ist, wobei das Netz (18) im Bereich seiner Fangöffnung (20) relativ zu dem Düsenrohr (16) in der Weise befestigt ist, daß eine von den aus den Düsen (22) ausgehenden Injektionsfluidstrahlen (26) unter Aufwirbelung des Gewässerbodens (24) erzeugte, aus Fahrtrichtung gesehen nach schräg hinten gerichtete Aufwärtsströmung im wesentlichen in die Fangöffnung (20) des Netzes (18) gerichtet ist, und wobei die Düsen (22) an den von dem Düsenrohr (16) herabhängenden Düsenschläuchen (42) vorgesehen sind.

3. Vorrichtung nach Anspruch 1 oder 2, dadurch gekennzeichnet, daß die Düsenschläuche (42) auf dem Gewässerboden (24) leicht aufliegen.

4. Vorrichtung nach einem der Ansprüche 1 bis 3, dadurch gekennzeichnet, daß das Düsenrohr (16) am Kurrbaum (32) eines herkömmlichen Baumkurrnetzes (18) im wesentlichen parallel zu diesem angebracht ist.

5. Vorrichtung nach einem der Ansprüche 1 bis 3, dadurch gekennzeichnet, daß das Düsenrohr (16) der im wesentlichen hohl ausgebildete Kurrbaum (32) eines herkömmlichen Baumkurrnetzes (18) ist.

6. Vorrichtung nach einem der vorangehenden Ansprüche, dadurch gekennzeichnet, daß die Düsenschläuche (40) bezüglich des Kurrbaumes (32) winkel- und/oder höhenmäßig verstellbar sind.

7. Vorrichtung nach einem der vorangehenden Ansprüche, dadurch gekennzeichnet, daß das Volumen und/oder der Druck der Injektionsfluidstrahlen (26) einstellbar ist/sind.

8. Vorrichtung nach einem der vorangehenden Ansprüche, gekennzeichnet durch eine Einrichtung zum Erzeugen eines die Fangöffnung (20) des Netzes (18) umgebenden Luftsperrvorhanges.

## Claims

1. Apparatus for fishing for organisms living on the bed of a watercourse, more particularly the seabed, comprising a boom trawl or trawl net (18) or the like adapted to be dragged over the watercourse bed and having a catch opening (20) pointing in the catch direction of a fishing vessel (10), the bottom front edge which defines the bottom of the catch opening (20) resting on the watercourse bed (24) and the top front edge which defines the top of the catch opening (20) being fixed on a trawl boom (32) or the like, and comprising an injection device (16, 22) for producing injection fluid jets (26) which whirl up the watercourse bed (24), characterised in that the injection device comprises a series of mutually spaced nozzle hoses (42) for the production of the injection fluid jets (26), said hoses extending substantially perpendicularly to the length of the trawl boom (32) and hanging down on to the watercourse bed (24).

2. Apparatus according to claim 1, characterised in that the injection device (16, 22) comprises a nozzle pipe (16) which is disposed substantially transversely of the longitudinal axis of the fishing vessel (10) and beneath the latter, and the length of which corresponds substantially to the width of the catch opening (20) of the net (18), and which has a plurality of mutually spaced nozzles (22) which face the watercourse bed (24), which pipe is adapted to receive the injection fluid, the net (18) being fixed, in the region of its catch opening (20), relatively to the nozzle pipe (16) in such manner that an upward flow, which extends obliquely rearwardly as considered from the direction of travel, and which is produced by the injection fluid jets (26) leaving the nozzles (22), the watercourse bed (24) being whirled up during this, is directed substantially into the catch opening (20) of the net (18), and wherein the nozzles (22) are provided on the nozzle hoses (42) hanging down from the nozzle pipe (16).

3. Apparatus according to claim 1 or 2, characterised in that the nozzle hoses (42) rest lightly on the watercourse bed (24).

4. Apparatus according to any one of claims 1 to 3, characterised in that the nozzle pipe (16) is disposed on the trawl boom (32) of a conventional boom trawl net (18) substantially parallel thereto.

5. Apparatus according to any one of claims 1 to 3, characterised in that the nozzle pipe (16) is the substantially hollow trawl boom (32) of a conventional boom trawl net (18).

6. Apparatus according to any one of the preceding claims, characterised in that the nozzle hoses (40) are adjustable in respect of angle and/or height relatively to the trawl boom (32).

7. Apparatus according to any one of the preceding claims, characterised in that the volume and/or pressure of the injection fluid jets (26) is/are adjustable.

8. Apparatus according to any one of the preceding claims, characterised by means for producing an air barrier curtain surrounding the catch opening (20) of the net (18).

## Revendications

1. Dispositif pour pêcher des êtres vivants séjournant au fond d'eaux, en particulier au fond de la mer, comportant un chalut à la trole ou de fond (18) ou élément semblable pouvant être traîné sur le fond des eaux et ayant un orifice de prise (20) orienté dans la direction de prise d'un bateau de pêche (10), dont le bord avant inférieur limitant en bas l'orifice de prise (20) repose sur le fond (24) des eaux et le bord avant supérieur limitant en haut l'orifice de prise (20) est fixé à une poutre de chalut (32) ou à un élément semblable, et un dispositif d'injection (16, 22) pour la production de jets de fluide d'injection (26) faisant tourbillonner le fond (24) des eaux, caractérisé par le fait que le dispositif d'injection comprend une rangée de tuyaux souples à buses (42) s'étendant à distance les uns des autres sensiblement perpendiculairement à l'étendue longitudinale de la poutre de chalut (32), tombant sur le fond (24) des eaux et destinés à produire les jets de fluide d'injection (26).

2. Dispositif selon la revendication 1, caractérisé par le fait que le dispositif d'injection (16, 22) présente un tuyau à buses (16) placé au-dessous du bateau de pêche (10) sensiblement perpendiculairement à l'axe longitudinal de celui-ci, de longueur correspondant sensiblement à la largeur de l'orifice de prise (20) du filet (18), ayant un grand nombre de buses (22) espacées dirigées vers le fond (24) des eaux, et dans lequel peut être envoyé le fluide d'injection, le filet (18) étant, dans la zone de son orifice de prise (20), fixé par rapport au tuyau à buses (16) de façon qu'un courant ascendant produit par les jets de fluide d'injection (26) sortant des buses (22) avec mise en tourbillons du fond (24) des eaux et dirigé, vu dans la direction de marche, obliquement vers l'arrière soit dirigé sensiblement dans l'orifice de prise (20) du filet (18), et les buses (22) étant prévues sur les tuyaux souples (42) qui pendent du tuyau à buses (16).

3. Dispositif selon l'une des revendications 1 et 2, caractérisé par le fait que les tuyaux souples à buses (42) reposent légèrement sur le fond (24) des eaux.

4. Dispositif selon l'une des revendications 1 à 3, caractérisé par le fait que le tuyau à buses (16) est monté sur la poutre de chalut (32) d'un chalut à la trole ou de fond classique (18) sensiblement parallèlement à celui-ci.

5. Dispositif selon l'une des revendications 1 à 3, caractérisé par le fait que le tuyau à buses (16) est la poutre de chalut sensiblement creux (32) d'un chalut à la trole ou de fond classique (18).

6. Dispositif selon l'une des revendications précédentes, caractérisé par le fait que les tuyaux souples à buses (40) sont mobiles angulairement et/ou en hauteur par rapport à la poutre de chalut (32).

7. Dispositif selon l'une des revendications précédentes, caractérisé par le fait que le volume et/ou la pression des jets de fluide d'injection (26) est ou sont réglables.

8. Dispositif selon l'une des revendications précédentes, caractérisé par un dispositif de production d'un rideau barrière d'air entourant l'orifice de prise (20) du filet (18).
